# EUROPÄISCHE PATENTSCHRIFT

(11) **EP 0 909 205 B1**
(45) Veröffentlichungstag und Bekanntmachung des Hinweises auf die Patenterteilung: **17.05.2000**
(21) Anmeldenummer: 97930471.4
(22) Anmeldetag: 01.07.1997
(51) Int. Cl.: B01D 9/00

(54) **KRISTALLISATIONSVORRICHTUNG UND -VERFAHREN**
CRYSTALLIZATION PROCESS AND DEVICE
PROCEDE ET DISPOSITIF DE CRISTALLISATION

(30) Priorität: 05.07.1996 DE 19627066
(43) Veröffentlichungstag der Anmeldung: 21.04.1999
(73) Patentinhaber: HAARMANN & REIMER GMBH, D-37601 Holzminden (DE)
(72) Erfinder: BAUMGARD, Hans-Dieter, D-37603 Holzminden (DE); HAEDKE, Bernhard, D-86720 Nördlingen (DE); HIMMELREICH, Josef, D-37603 Holzminden (DE); JUDAT, Helmut, D-40764 Langenfeld (DE)
(74) Vertreter: Mann, Volker, Dr. (DE)
(86) Internationale Anmeldenummer: EP9703440
(87) Internationale Veröffentlichungsnummer: WO9801204

(56) Entgegenhaltungen:
- EP-A- 0 216 702
- EP-A- 0 484 769
- CH-A- 365 053
- GB-A- 460 834
- GB-A- 865 311
- US-A- 3 266 871
- US-A- 3 450 751
- US-A- 3 892 539

## Beschreibung

Die vorliegende Erfindung betrifft einen kontinuierlich betriebenen zweiteiligen Kristallisierer, der für die Spaltung racemischer Gemische besonders geeignet ist, sowie ein Trennverfahren für schwer trennbare Feststoffgemische, insbesondere für Racemate, unter Verwendung des Kristallisierers.

Bei der Synthese von Racematen entstehen die beiden Enantiomeren zu gleichen Teilen, da sie denselben Energieinhalt besitzen. Oft wird aber nur eine der beiden stereoisomeren Formen gebraucht, wie z.B. die l-Aminosäuren zum Aufbau der Proteine. Es ist daher notwendig, die Trennung des Racemats in die optisch aktiven Komponenten, die l- und die d-Form, vorzunehmen. Neben anderen hat sich das Kristallisationsverfahren für die Stereoisomerentrennung gut bewährt. Es basiert auf dem Prinzip, daß das gewünschte optisch aktive Isomer bevorzugt aus einer übersättigten Lösung des Racemats auskristallisiert, wenn die Lösung mit wenigen Kristallen dieses Isomers angeimpft wird. Beispiele hierfür sind die Trennung des Ammoniumsalzes von acyliertem Tryptophan und acyliertem Phenylalanin. Derivate aromatischer Sulfonsäuren lassen sich ebenfalls auf diesem Weg trennen, z.B dl-Lysin als Sulfanilsäuresalz und dl-Serin als m-Xylolsulfonat.

Zur Durchführung des Kristallisationsverfahrens sind verschiedene Apparaturen vorgeschlagen worden. In der US-Patentschrift 3,450,751 wird für die Spaltung racemischer Glutaminsäure, Glutamate und ihrer Derivate der Einsatz eines Rohrreaktors beschrieben, bei dem die Rückvermischung weitestgehend verhindert ist. Nachteil dieses Verfahrens ist die Notwendigkeit, ständig Impfkristalle des ge- wünschten Enantiomeren der übersättigten Lösung des Racemats zuführen zu müssen.

In der Patentschrift US 3 266 871 wird zur Spaltung von Glutaminsäure und ihrer Hydrochloride die Verwendung eines zylindrischen Behälters mit konischem Boden als Kristallisierer vorgeschlagen, der durch ein Drahtgewebe in zwei Bereiche geteilt ist. Die Maschenweite des Drahtgewebes ist so gewählt, daß die Impfkristalle nicht in den anderen Teil des Behälters gelangen können, wogegen die übersättigte racemische Lösung selbstverständlich das Drahtnetz passieren kann. Jeder Behälterteil ist mit einem Propellerrührer ausgerüstet, der die Impfkristalle in dem jeweiligen Bereich homogen suspendiert. Mit dieser Apparatur lassen sich gemäß den in der US-Patentschrift 3,266,871 mitgeteilten Beispielen bei der Trennung der Glutaminsäure folgende Ergebnisse erzielen:

| Beispiel | mittl. Verweilzeit (min) | Temperatur (°C) | Dauer des Prozesses (h) | Reinheit der l-Säure (%) | Glutaminsäure d-Säure (%) |
|---|---|---|---|---|---|
| 1 | 7,5 | 50 | 10 | 92,3 | 92,5 |
| 2 | 6,0 | 50 | 7 | 96,4 | 95,6 |

Die optische Reinheit der zugegebenen Impfkristalle betrug dabei 98 %. Auffallend ist, daß bei gleicher Spaltungstemperatur von 50°C die Reinheit der l-Säure bereits nach 7 Stunden nur 96,4 % und nach 10 Stunden sogar nur noch 92,3 % beträgt. Dies deutet darauf hin, daß das Drahtgewebe zwar für die verwendeten Impfkristalle undurchlässig ist, aber für kleinste Kristallkeime kein wirksames Hindernis darstellt. Dieser Sachverhalt wird im Grunde genommen in der Zeitschrift Chemie-Ing.- Techn. 42. Jahrg. 1970/Nr. 9/10, S. 641-644 bestätigt, wonach die industrielle Trennung des Salzes der dl-Glutaminsäure bei 55°C in einer vergleichbaren Anordnung durchgeführt und nach sieben Stunden unterbrochen wird: die Kristalle (deren optische Reinheit mindestens 95 % beträgt) werden abgetrennt, neue Impfkristalle werden zugegeben, und der ganze Vorgang wird wiederholt. Die Anordnung ermöglicht also nicht einen echten kontinuierlichen Prozeß, da in regelmäßigen relativ kurzen Zeitabständen das Kristallisat vollständig gegen neue Impfkristalle ausgetauscht wird.

Die Verunreinigung des gewünschten Enantiomeren mit Kristallen seines optischen Antipoden könnte verhindert werden, wenn die beiden ideal durchmischten Bereiche vollkommen voneinander getrennt sind, wenn also zwei separate Rührkessel verwendet werden. Dann stellt sich allerdings die Frage, wie die racemische Lösung von Kessel zu Kessel gelangt, ohne Kristalle mitzuführen.

Eine Lösung dieses Problems ist beispielhaft für die Spaltung von α-methyl-3,4-dihydroxy-phenylalanin (α-methyl DOPA) in der Zeitschrift Chemical Engineering, Nov. 8, 1965, S. 247-248 beschrieben. Danach werden zwei Rührkessel in Parallelschaltung betrieben und zu gleichen Teilen mit der übersättigten racemischen Lösung gespeist. Jeder Kessel ist mit einer Suspensionspumpe ausgerüstet, welche die Kristallsuspension durch ein spezielles Filter fördert. In diesem motor-getriebenen Filter wird das Filtrat abgetrennt und dem Lösekessel zur Anreicherung wieder zugeführt. Die eingedickte Suspension fließt in den jeweiligen Kristaller zurück.

Der Nachteil dieser Vorrichtung besteht darin, ein geeignetes Filter für die Abtrennung des Filtrates von den Kristallen zu finden. Da kein bekanntes Filter den Anforderungen genügte, haben die Verfasser des genannten Artikels ein spezielles Filter selbst gebaut; aus dem o.g. Artikel gehen jedoch keine weiteren Einzelheiten über die Beschaffenheit dieses Filters hervor.

In der US-Patentschrift 3,892,539 wird versucht, das geschilderte Trennproblem bei Enantiomeren dadurch zu lösen, daß die selektive Kristallisation in fluidisierten Betten durchgeführt wird. Diese bestehen aus einem unteren Teil, der konisch ausgeführt ist und sich nach unten verjüngt, und einem oberen Teil, der zylindrisch gebaut ist. Am unteren Ende des Fließbettes befindet sich ein Ultraschall-Gerät, das große sedimentierende Kristalle zerkleinert. Für die Spaltung racemischer Gemische wird die Hintereinanderschaltung zweier fluidisierter Betten bevorzugt. Die übersättigte racemische Lösung tritt unten in den ersten Fließbett-Kristaller ein, der mit Impfkristallen eines Enantiomeren beaufschlagt ist. Die Impfkristalle wachsen und nehmen entsprechend ihrer Größe und der Strömungsgeschwindigkeit der Lösung eine bestimmte Höhe in dem Kristaller ein. Die kleinsten Kristalle bilden eine Grenzschicht im unteren Teil des zylindrischen Bettes aus. In diesem Bereich sind Schaugläser in verschiedenen Höhen der Säule angebracht, wodurch die Lage der Grenzschicht beobachtet und aufgrund dessen gegebenenfalls die Entnahme von Kristallen vorgenommen werden kann. Die von dem entsprechenden Enantiomeren abgereicherte und mit dem Antipoden angereicherte Lösung verläßt das zylindrische Fließbett am Kopf und strömt dem nachgeschalteten zweiten Fließbett-Kristaller zu.

Bei dem beschriebenen Apparat kann auf die Filtration der das erste Fließbett verlassenden Lösung verzichtet werden, sofern insbesondere die Sedimentation der kleinsten Keime im oberen Teil des Fließbettes (oberhalb der Grenzschicht der Kristalle) hundertprozentig funktioniert. Die Strömungsgeschwindigkeit der Lösung hält im unteren Bereich des zylindrischen Fließbettes die kleinsten Impfkristalle in Schwebe; es besteht daher die Gefahr, daß die wesentlich kleineren Kristallkeime mit derselben Strömungsgeschwindigkeit ausgetragen werden. Darüber hinaus hat die Vorrichtung gemäß der US-Patentschrift 3,892,539 den wesentlichen Nachteil, daß eine Durchsatzänderung im laufenden Betrieb der Vorrichtung kaum möglich ist, weil hiermit eine beträchtliche Änderung der Lage der Mikro-Kristall-Grenzschicht verbunden ist.

Die stationäre Betriebsweise der Kristallisiervorrichtung wird dadurch erheblich erschwert.

Der Erfindung liegt folgende Aufgabenstellung zugrunde: Es ist eine Kristallisiervorrichtung zu entwickeln, die eine echte kontinuierliche Betriebsweise über Wochen und Monate ermöglichen soll und die obengenannten Nachteile nicht aufweist.

Die Impfkristalle eines Enantiomeren sollen nur einmal zu Beginn des Produktionszyklus zugegeben werden.

Die Feststoffkonzentration soll so hoch wie möglich gehalten werden, um (bei kleinster Übersättigung) eine hohe Raum-Zeit-Ausbeute zu erzielen.

Die Vermischung der Feststoffsuspension soll aber dennoch homogen sein, d.h. alle Volumenelemente der Suspension sollen die gleiche Teilchengrößenverteilung besitzen.

Die aus dem Kristallisierer erhältlichen Kristalle sollen so groß sein, daß sie sich mechanisch gut abtrennen lassen.

Die zulaufende übersättigte Lösung der Enantiomeren soll möglichst schnell mit der gesamten Feststoffsuspension vermischt sein, damit die Übersättigung rasch abgebaut wird.

Aus der Kristallisiervorrichtung soll die von einem Enantiomeren angereicherte Lösung klar abfließen, ohne die feste Phase des jeweiligen Enantiomeren, auch nicht in Form von feinen Keimen, mitzunehmen, damit die Vergiftung der Kristall er über einen möglichst langen Zeitraum unterbleibt.

Die Reinheit der aus dem Kristallisierer gewonnenen Einzelkomponenten soll möglichst größer als 99 % sein.

Der Durchsatz an Trennlösung soll in weiten Grenzen stark variiert werden können (± 30%), ohne daß besondere Anpassungen an der Vorrichtung notwendig sind.

Die Aufgabe wird erfindungsgemäß durch eine Kristallisiervorrichtung gelöst, die Gegenstand der Erfindung ist, und insbesondere zur Kristallisation schwer trennbarer Feststoffe, bevorzugt zur Trennung von racemischen Gemischen aus ihren Lösungen, geeignet ist, bestehend aus einem Oberteil und einem Unterteil, mit einem temperierbaren Rührkessel als Unterteil, das ein Rührwerk, gegebenenfalls eine Zuleitung für die Kristallisationslösung und gegebenenfalls eine Ableitung für die Suspension des auskristallisierten Produktes aufweist,
und mit einem kegelförmigen, temperierbaren Sedimentationsteil als Oberteil, das ein wandgängiges Rührelement, gegebenenfalls eine Ableitung für die vom Produkt abgereicherte Lösung und eine Öffnung zum Rührkessel aufweist,
wobei das Rührwerk im Bereich der Öffnung eine von der Öffnung weg gerichtete Strömung der Kristallisationslösung erzeugt.

Das Rührwerk ist bevorzugt ein Radialförderer, insbesondere ein von unten angetriebener Impellerrührer, ein Balkenrührer, ein Scheibenrührer, oder eine CBT-Turbine. Das Rührwerk kann auch ein Axialförderer sein, der in einem Leitrohr unterhalb der Öffnung angeordnet ist.

Der Axialförderer wird insbesondere in der Mittelachse des Rührkessels eingesetzt um die von der Öffnung weggerichtete Strömung zu erzeugen.

Das wandgängige Rührelement ist insbesondere ein langsam laufender, von oben angetriebener Blattrührer, der bevorzugt einen zusätzlichen Rahmen aufweist, der die Innenwand des Sedimentationsteils überstreicht und dadurch von abgesetzten Kristallen freihält.

Das wandgängige Rührelement ist in einer besonderen Ausführung der Erfindung beheizbar oder kühlbar ausgeführt, beispielsweise mittels elektrischer Widerstandsheizung oder mit Hilfe eines durchgeführten Leitungssystems für ein Wärmeaustauschmedium.

In der bevorzugten Ausführung weist der sich nach oben öffnende Konus des Sedimentationsteils einen Öffnungswinkel von 10 bis 60°, insbesondere 20 bis 50°, bevorzugt von 25 bis 45° auf.

Der Sedimentationsteil und der Rührkessel sind bevorzugt mit einer zusätzlichen Temperiereinrichung versehen, die eine Einstellung der Temperatur des Reaktorinhalts ermöglicht. So kann der Sedimentationsteil oder der Rührkessel eine Doppelwand mit Zu- und Ableitungen für ein Wärmeaustauschmedium aufweisen, die in ihrem Inneren zur Kühlung oder Beheizung der Kristallisationslösung von dem Wärmeaustauschmedium durchströmt wird.

In einer weiteren bevorzugten Variante ist am Rührkessel eine zusätzliche Umpumpschleife mit Wärmetauscher vorgesehen, die es ermöglicht, einen Teilstrom der Kristallsuspension aus dem intensiv gerührten Rührkessel über die Umpumpschleife zu entnehmen und im Wärmetauscher um bevorzugt 0,1 bis 5"C zu erwärmen und dem Rührkessel anschließend wieder zuzuführen.

Da Einbauten zur Stromführung wegen der Gefahr der Anlagerung von Feststoff in vielen Fällen nicht verwendet werden können, wird bevorzugt ein Rührertyp für den Rührer des Rührkessels gewählt, der eine hohe Umwälzrate auch ohne Leitbleche erzeugt. Ein solcher Rührertyp ist der Impellerrührer, der am Boden des Rührkessels angeordnet ist und in der Nähe der bevorzugt zylindrischen Behälterwand eine aufwärts gerichtete Strömung erzeugt.

Eine besonders bevorzugte Ausführungsform der Erfindung ist so ausgestaltet, daß nach einer Lauflänge von z.B. ca. einem Behälterdurchmesser die Strömung der Kristallisationslösung zur Behältermitte hin abdreht, um im Behälter unterhalb der Öffnung zum Sedementationsteil senkrecht nach unten zu strömen. In der Nähe des Bodens wird die zentrale, vornehmliche axial nach unten gerichtete Strömung dann durch den Impellerrührer radial beschleunigt und durch die Kontur des Klöpperbodens in die Aufwärtsströmung gezwungen. Auf diese Weise entsteht eine starke Zirkulationsströmung, die selbst bei relativ zähen Kristallbreien sehr gut ausgeprägt ist.

Die Umlenkung der Strömung um 180° im oberen Bereich des Rührkessels wird durch eine entsprechende Formgebung des Rührkesseldeckels verstärkt und die Ankopplung des Sedimentationsteils in diesem zentralen Bereich der axial nach unten gerichteten Strömung vorgenommen.

Der Sedimentationsteil der Vorrichtung ist zweckmäßigerweise kegelförmig ausgeführt und stellt mit seiner Spitze die Verbindung zur intensiv gerührten Kristallbreizone her. Damit die Turbulenzen des Kristallbreies sich nicht in den Sedimentationsteil fortpflanzen, ist im Bereich der Ankopplung von Sedimentationsteil und Rührkessel ein langsam laufendes Rührelement, z.B. ein vierblättriger Blattrührer installiert, welcher die sekundäre Strömung des Kristallbreies (die Rotation) bricht. Der bevorzugt verwendete Blattrührer wird insbesondere von einem Rahmen getragen, der die kegelförmige Kontur der Sedimentationszone aufweist und beheizt oder gekühlt werden kann. Das wandgängigen Rührelement, z.B. der Rahmen einschließlich Blattrührer, wird wie ein Krälwerk langsam gedreht (z.B. um wenige Umdrehungen pro Stunde), um den auf der Kegelfläche abgesetzten Feststoff wieder der Kristallisationszone zuzuführen. Auf diese Weise gelingt es, trotz intensiv gerührter Kristallisationszone eine hiervon nahezu unbeeinflußte Sedimentationszone im Sedimentationsteil anzuschließen, aus der die gewünschte klare Lösung am Kopf des Sedimentationsteiles ohne schädliche Kristallkeime abgenommen werden kann.

Wegen der sich gegebenenfalls stark unterscheidenden Drehzahlen des Rührwerkes und des Krälwerkes ist es besonders sinnvoll, zwei Antriebe zu wählen und das Rührwerk von unten anzutreiben. Dies hat den Vorteil, daß in der Kristallisationszone des Rührkessels keine lange Welle rotiert, die möglicherweise Anlaß zu Anbackungen gibt.

Darüber hinaus zeichnet sich die Verwendung eines unteren Antriebes durch eine größere Laufruhe aus. Der Antrieb des Rührwerkes kann selbstverständlich auch drehzahlregelbar ausgeführt werden, um Änderungen in der Betriebsweise (beispielsweise einer Änderung der Feststoffkonzentration oder der gewünschten mittleren Teilchengröße der Kristalle) Rechnung zu tragen.

Der neue Kristallisierer kann vorteilhaft zur kontinuierlichen Spaltung racemischer Gemische eingesetzt werden, wobei für jede Komponente des Racemates ein Kristallisierer eingesetzt wird. Diese können sowohl in Parallelschaltung als auch in Hintereinanderschaltung betrieben werden.

Gegenstand der Erfindung ist auch ein Verfahren zur Trennung von Enantiomeren eines racemischen Gemisches unter Verwendung der erfindungsgemäßen Kristallisiervorrichtung, wobei eine übersättigte Lösung des Racemats dem Rührkessel zugeführt und mit Impfkristallen eines Enantiomeren mittels dem Rührwerk intensiv gemischt wird, die Strömung der entstehenden Suspension mit Hilfe des langsamer drehenden, wandgängigen Rührelementes im Sedimentationsteil beruhigt und eventuell nachgebildete Produktkristalle auf der Innenwand des Sedimentationsteils abgeschieden werden und die von dem Enantiomeren abgereicherte Lösung am Kopf des Sedimentationsteils abgeführt wird.

In einem bevorzugten Verfahren sind zwei oder mehr erfindungsgemäße Kristallisiervorrichtungen hintereinander oder parallel geschaltet und werden kontinuierlich betrieben.

Insbesondere ist bei der Hintereinanderschaltung von zwei Kristallisiervorrichtungen die Ableitung der ersten Kristallisiervorrichtung mit der Zuleitung der zweiten Kristallisiervorrichtung verbunden und in beiden Vorrichtungen werden unterschiedliche Impfkristalle der optischen Antipoden eingesetzt.

Bei der Parallelschaltung macht sich neben der hohen Raumzeitausbeute der Kristallisierzone, insbesondere die große Zuverlässigkeit des wartungsfreien Trennapparates (gegenüber z.B. im Stand der Technik benutzten speziellen Filtern) vorteilhaft bemerkbar, so daß der Spaltungsprozeß nicht wegen Schwierigkeiten an Suspensionspumpen oder an z.B. Filtern unterbrochen werden muß. Die besondere Stärke des Kristallisierers, nämlich der absolut klare Lösungsablauf, kommt allerdings noch wirkungsvoller bei der Hintereinanderschaltung der Kristaller zum Tragen. Bei dieser bevorzugten Verfahrensvariante strömt die an der einen optisch aktiven Komponente abgereicherte und mit der anderen Komponente angereicherte Lösung aus dem ersten Kristallisierer über einen Wärmetauscher in den zweiten Kristallisierer. Dort würden sie sofort eine Vergiftung hervorrufen, wenn Kristallisationskeime aus dem ersten Kristallisierer in den zweiten eingeschleppt würden. Die Reinheit der erzielten Produkte und die Dauer des Produktionsprozesses sind daher ein Indiz für die Qualität der Feststoffabtrennung.

Das Verhältnis von Feststoffkristallen zur Gesamtsuspension kann von 5-85 Gew.-%, bevorzugt von 15-70 Gew.-%, insbesondere bevorzugt von 20-65 Gew.-% betragen.

Gegenstand der Erfindung ist auch die Verwendung der erfindungsgemäßen Vorrichtung zur Trennung von racemischen Gemischen mittels Kristallisation.

Was die Reinheit der Produkte betrifft, so wird darauf verwiesen, daß z.B. bei der industriellen Spaltung von d,l-Mentholester in zwei hintereinander geschalteten erfindungsgemäßen Kristallisierern eine Reinheit von besser als 99,9 % erzielt wurde, wobei die Produktionszeit 6 bis 8 Monate betrug.

Die Erfindung wird nachstehend beispielhaft anhand der Figuren näher erläutert.

Figur 1 stellt ein Ausführungsbeispiel der erfindungsgemäßen Kristallisiervorrichtung dar.

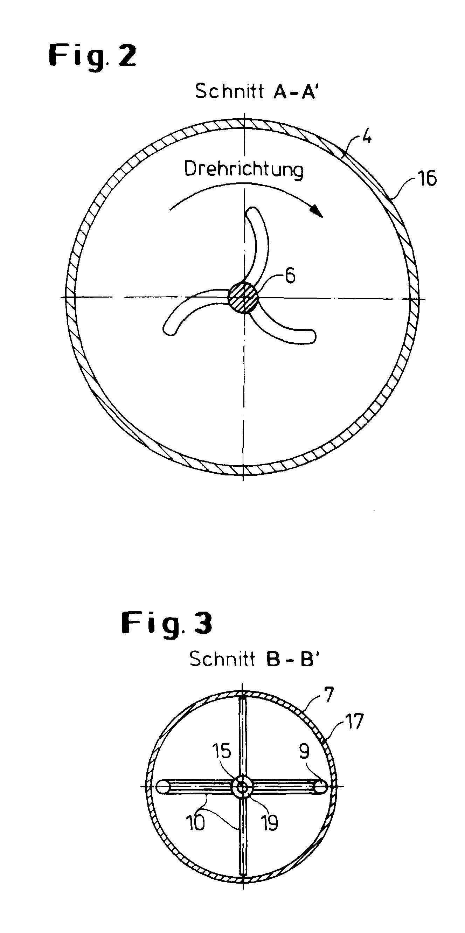

Figur 2 zeigt einen Querschnitt durch den Rührkessel 1 entsprechend der Linie A-A' in Fig. 1.

Figur 3 zeigt einen Querschnitt durch den Sedimentationsteil 2 entsprechend der Linie B-B' in Fig. 1.

Figur 4a-4d zeigen verschiedene Typen von radialfördernden Rührern, die anstelle des bevorzugt eingesetzten Impellerrührers verwendet werden können.

Figur 5 zeigt eine Ausführungsform der Vorrichtung mit einer Kombination von Leitrohr und axial förderndem Rührer.

Figur 6 zeigt eine Anordnung zweier Kristallisiervorrichtungen in Hintereinanderschaltung.

Figur 7 zeigt eine Anordnung zweier Kristallisiervorrichtungen in Parallelschaltung.

### Beispiel

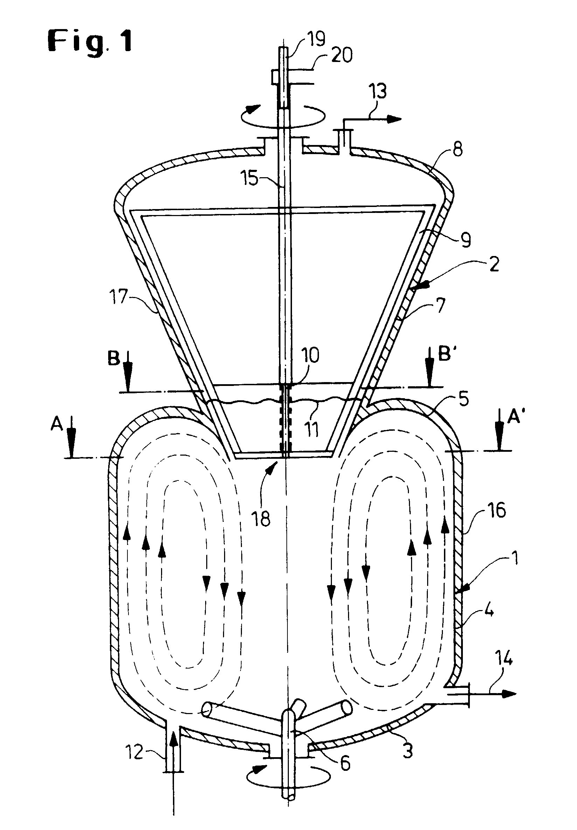

Die Kristallisiervorrichtung weist zwei Zonen auf: die Kristallisierzone im Rührkessel 1 und die Sedimentationszone im Sedimentationsteil 2. Der Rührkessel 1 wird gebildet von dem Klöpperboden 3, dem zylindrischen Mantel 4 und dem Deckel 5, der so geformt ist, daß er die Umlenkung der aufwärtsgerichteten Strömung um 180° unterstützt (siehe Figur 1). Die Umwälzung des Kristallbreies (Kristallsuspension) in der Kristallisierzone 1 wird gemäß Figur 1 von dem Impellerrührer 6 bewerkstelligt, der im Klöpperboden 3 angeordnet ist und von unten angetrieben wird (der Antrieb ist nicht gezeichnet).

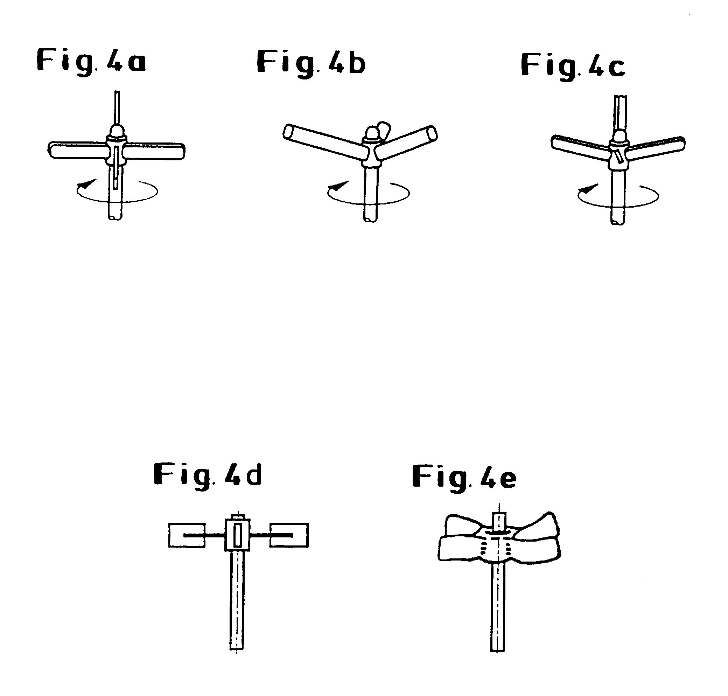

Anstelle des Impellerrührers können folgende Rührertypen eingesetzt werden: Balkenrührer (Fig. 4a, 4b, 4c). Scheibenrührer (Figur 4d) oder eine CBT-Turbine (Fig 4e)

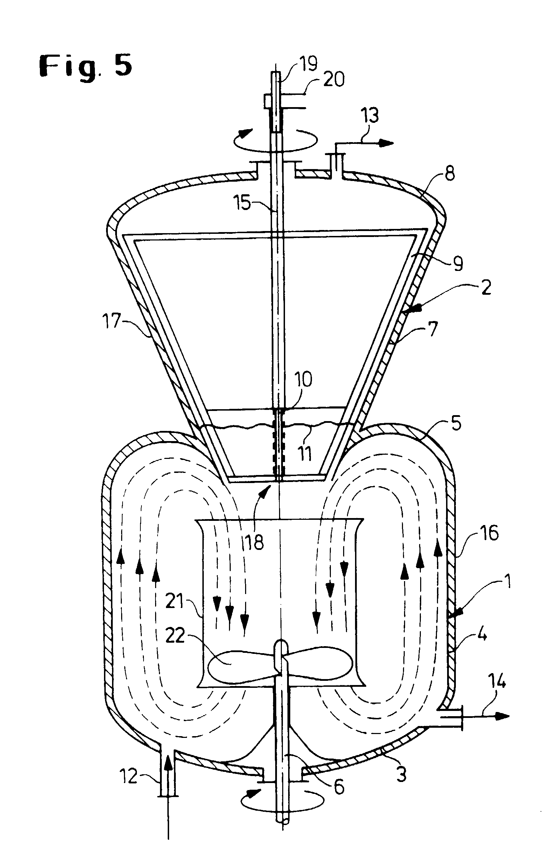

Figur 5 zeigt eine Variante der Vorrichtung nach Figur 1, bei der der Impellerrührer 6 durch einen axial fördernden Rührer 22 ersetzt ist, und von einem Leitrohr 21 umgeben ist, wodurch die gewünschte Umwälzströmung der Kristallsuspension erreicht wird.

Der Sedimentationsteil 2 wird gebildet von der Mantelfläche des Kegelstumpfes 7 und dem Deckel 8. Sedimentationsteil 2 und Rührkessel 1 weisen eine Doppelwand 16, 17 auf, die in ihrem Zwischenraum den Durchfluß eines Wärmetauschermediums ermöglicht. Die Anschlüsse und der Wärmetauscher sind nicht gezeichnet. Der Öffnungswinkel des Kegelstumpfes beträgt etwa 30°. Damit sich die hier sedimentierenden Feststoffpartikel nicht auf der schrägen Innenwand des Kegels 7 ansammeln, sondern wieder dem Kristallbrei im Rührkessel 1 zugeführt werden, rotiert im Sedimentationsteil 2 der wandgängige, beheizbare Rahmen 9 mit einer sehr kleinen Drehzahl (wenige Umdrehungen pro Stunde); er wird von oben über die Welle 15 angetrieben (der Antrieb ist nicht gezeichnet). Zur Temperierung des Rahmens 9 dienen die Zuleitung 19 und die Ableitung 20 für das Wärmeübertragungsmittel, das den hohlen Rahmen 9 durchströmt. Im unteren Teil des Kegelstumpfes 7 ist der vierblättrige Blattrührer 10 in dem Rahmen 9 integriert und verhindert die Übertragung von Turbulenzen und der Rotationsströmung, die von dem Impellerrührer erzeugt wird, auf die Sedimentationszone in Sedimentationsteil 2. Die Ausdehnung der Rührblätter in axialer Richtung soll vorzugsweise größer sein als der Radius der Eintrittsöffnung 18 in den Sedimentationsteil 2, insbesondere bevorzugt das 1,5- bis 2,5-fache.. Im stationären Zustand dringt die Kristallsuspension durch die Öffnung 18 in den unteren Teil des Kegelstumpfes 7 ein und bildet eine Grenze 11 zur kristallfreien Phase darüber aus. Diese Grenze ist gegenüber Drehzahländerungen des Impellerrührers sowie gegenüber Durchsatzänderungen relativ stabil. Voraussetzung ist, daß der engste Querschnitt des Kegelstumpfes am Übergang von der Kristallisierzone zur Sedimentationszone für den Auslegungsdurchsatz richtig dimensioniert ist. Da viele Parameter die Lage der Kristallgrenze 11 beeinflussen, wie z.B. die Feststoffkonzentration, die Teilchengrößenverteilung, die Form der Kristalle, die Dichtedifferenz zwischen dem Feststoff und der Lösung, die Rührintensität in der Kristallisierzone sowie die Geschwindigkeit der Lösung, ist es nicht möglich, eine einfache Berechnungsvorschrift für den engsten Querschnitt anzugeben. Als eine rohe Abschätzung kann jedoch aus der Gleichheit der Sinkgeschwindigkeit der kleinsten Kristallpartikel und der Geschwindigkeit der Lösung auf den erforderlichen Querschnitt geschlossen werden.

Der Zulauf 12 der übersättigten Lösung erfolgt in der Nähe des Impellerrührerumfangs, der Ablauf 13 der klaren Lösung am Kopf 8 des Sedimentationsteils 2. Die Suspension mit den produzierten Kristallen wird dem umgewälzten Kristallbrei an der Ableitung 14 entnommen und einer mechanischen Abtrennung (Sieb oder Zentrifuge) zugeführt.

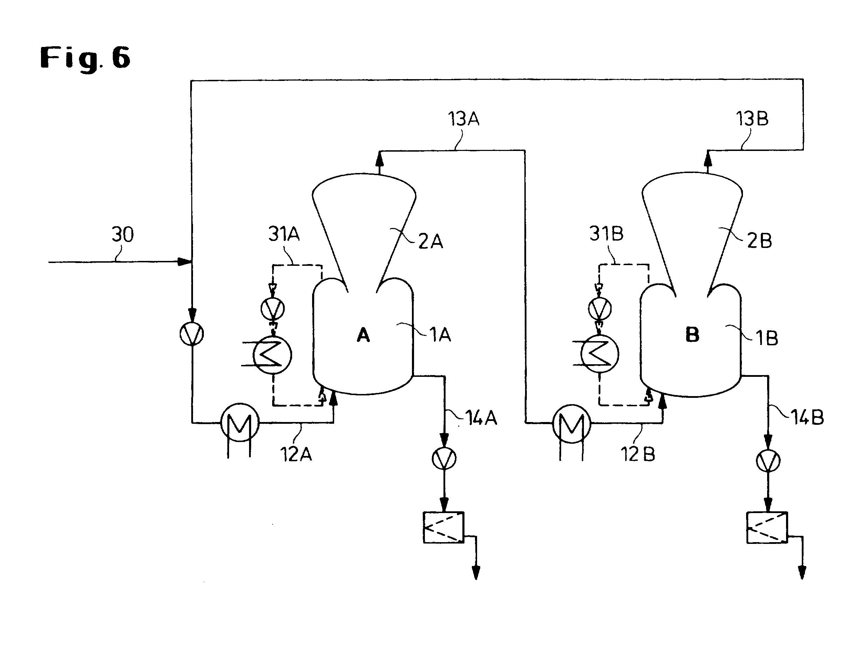

In Fig. 6 sind schematisch hintereinandergeschaltete Kristallisierer A und B dargestellt. Ausgangsracemat wird dem Kreislauf bei 30 zugeführt. Im übrigen bezeichnen die Ziffern mit dem Suffix A bzw. B jeweils gleiche Elemente wie in Fig. 1. Bei 14 A wird die eine Racematkomponente und bei 14 B die andere Racematkomponente ausgeschleust.

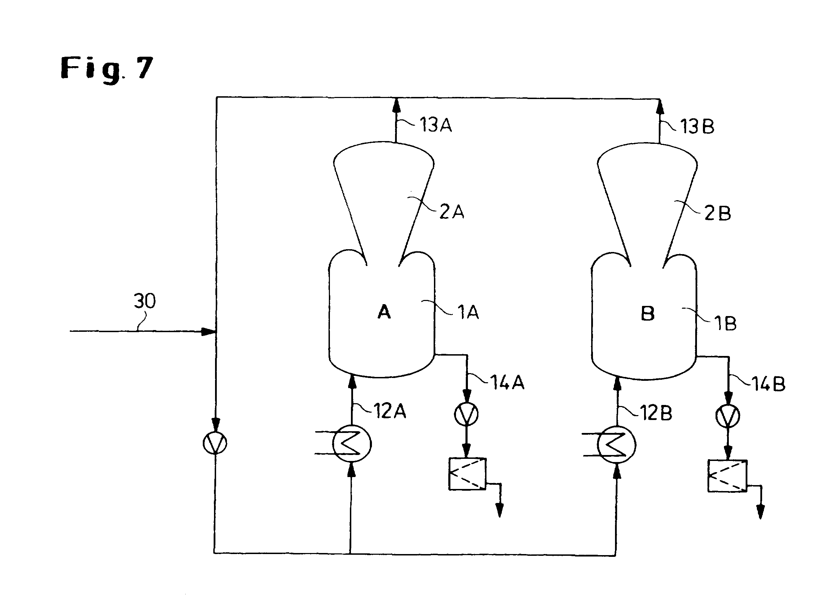

Fig. 7 zeigt schematisch zwei parallelgeschaltete Kristallisierer.

Zur Verlängerung der Laufzeit des Kristallers kann ein Teilstrom der Suspension über einen Umpumpkreislauf (31 A bzw. 31 B in Fig. 6) aus der intensiv gerührten Zone 1 entnommen, in einem Wärmetauscher um 0,1 bis 5"C erwärmt und der Zone 1 wieder zugeführt werden. Diese Maßnahme hat sich als sehr vorteilhaft erwiesen, da sie die Laufzeit des Kristallers wesentlich verlängert.

Obwohl ein relativ großes Volumen für die Feststoffabtrennung durch Sedimentation zur Verfügung gestellt werden muß und dieses große Volumen nahezu kristallfrei ist, hat sich im Betrieb gezeigt, daß trotz der langen Verweilzeit der Lösung in der Sedimentationszone keine unerwünschten Kristalle ausfallen.

Mit Hilfe der beschriebenen Kristallisiervorrichtung wurde die kontinuierliche Trennung von l- und d-Menthylbenzoat mit zwei erfindungsgemäßen, hintereinander geschalteten Kristallern durchgeführt.

Für eine kontinuierliche Produktion von 300 kg/h l- und d-Menthylbenzoat werden zwei 60 m³ große Kristaller der erfindungsgemäßen Ausführung (s. Fig. 1) verwendet. Zunächst wird in den Kristallern eine gesättigte Lösung des Racemates von dl-Menthylbenzoat in Methanol vorgelegt. Diese Lösung wird dann auf eine Temperatur abgekühlt, die 0,5°C unterhalb des Sättigungspunktes liegt. Danach werden beide Kristaller bei abgestellten Pumpen und abgestelltem Blattrührer, jedoch bei laufendem Impellerrührer mit jeweils 500 kg d- bzw. mit l-Menthylbenzoat-Kristallen angeimpft. Hiernach wird auch der Blattrührer eingeschaltet, und es werden beide Kristaller bei laufenden Rührern geflutet, wobei zunächst jeder Kristaller für sich mit außen liegendem Umpumpkreislauf betrieben wird. In diesem Zustand werden die Temperaturen in den beiden Kristallern in der Weise abgesenkt, daß die Temperaturdifferenz zwischen Eintritt 12 und Austritt 13 der Lösung 0,2 bis 0,3 °C nicht übersteigt. Wenn die über den Kristallen stehende klare Lösung eine spezifische Drehung mit dem Wert 0° erreicht hat, werden die beiden Kristaller hintereinander geschaltet, d.h. die aus dem ersten Kristaller am Auslauf 13 entnommene mit 1-Menthylbenzoat angereicherte klare Lösung wird dem zweiten Kristaller über dessen Einlaß 12 zugeführt. Die aus dem zweiten Kristaller an seinem Auslaß 13 austretende Lösung wird mit dl-Menthylbenzoat aufgefrischt und dem ersten Kristaller wieder zugeführt. Die aus den Kristallern im Folgenden ablaufende Lösung weist eine spezifische Drehung auf, die den in den jeweiligen Kristallern vorhandenen Kristallen entgegengesetzt ist. Die auskristallisierten Mengen werden als flüssiges dl-Menthylbenzoat in den Kreislauf dosiert. Die produzierte Menge wird aus der Differenz der spezifischen Drehung der Lösung zwischen Eingang und Ausgang des jeweiligen Kristallers berechnet.

Die Suspension mit den produzierten Kristallen wird den Rührkessel 1 aus am Auslaß 14 entnommen und einer mechanischen Abtrennung (Sieb oder Zentrifuge) zugeführt.

Die abgereicherte Lösung wird dem Raktor nach Vermischung mit frischer Ausgangslösung wieder zugeführt.

Die Qualität der produzierten Kristalle wird kontrolliert. Fällt die Reinheit unter 99,6 %, wird der kontinuierliche Durchfluß der Kristaller kurzzeitig aufgehoben, und es werden die Temperaturen in den Kristallern soweit angehoben, daß die Lösung die Drehungsrichtung der in dem jeweiligen Kristaller vorhandenen Kristalle aufweist. Danach wird wieder abgekühlt, bis eine spezifische Drehung von 0° erreicht ist. Dann werden die Kristaller wieder kontinuierlich beaufschlagt, so daß die Produktion fortgesetzt wird. Während der Produktion befinden sich ca. 2 bis 3 t Kristalle in der intensiv gerührten Kristallisationszone der Kristaller. Die Produktion kann nach einmaligem Animpfen ca. 6 bis 8 Monate lang auf die oben beschriebene Weise durchgeführt werden.

## Patentansprüche

1. Kristallisiervorrichtung, insbesondere zur Kristallisation schwer trennbarer Feststoffe, bevorzugt zur Trennung von racemischen Gemischen, aus ihren Lösungen bestehend aus Oberteil (2) und Unterteil (1), dadurch gekennzeichnet, dass das Unterteil, das ein Rührwerk (6) gegebenenfalls eine Zuleitung (12) für die Kristallisationslösung und gegebenenfalls eine Ableitung(14) für die Suspension des auskristallisierten Produktes aufweist, aus einem temperierbaren Rührkessel (1) gebildet wird, dass das Oberteil, das ein wandgängiges Rührelement (9,10), gegebenenfalls eine Ableitung (13) für die vom Produkt abgereicherte Lösung und eine Öffnung (18) zum Rührkessel (1) aufweist, aus einem kegelförmigen, temperierbaren Sedimentationsteil (2) gebildet wird, wobei das Rührwerk (6) im Bereich der Öffnung (18) eine von der Öffnung (18) weg gerichtete Strömung der Kristallisationslösung erzeugt.

2. Vorrichtung nach Anspruch 1, dadurch gekennzeichnet, daß das Rührwerk (6) ein Radialförderer, insbesondere ein von unten angetriebener Impellerrührer ist.

3. Vorrichtung nach Anspruch 1, dadurch gekennzeichnet, daß das Rührwerk (22) ein von unten angetriebener Axialförderer ist, der in einem Leitrohr (21) angeordnet ist.

4. Vorrichtung nach den Ansprüchen 1 bis 3, dadurch gekennzeichnet, daß das wandgängige Rührelement (9,10) ein langsam laufender, von oben angetriebener Blattrührer (10) ist.

5. Vorrichtung nach Anspruch 4, dadurch gekennzeichnet, daß der Blattrührer (10) einen zusätzlichen Rahmen (9) aufweist der die Innenwand des Sedimentationsteils (2) von Kristallen freihält.

6. Vorrichtung nach Anspruch 5, dadurch gekennzeichnet, daß der Rahmen (9) beheizbar oder kühlbar ist.

7. Vorrichtung nach den Ansprüchen 1 bis 6, dadurch gekennzeichnet, daß der Konus des Sedimentationsteils (2) einen Öffnungswinkel von 10 bis 60°, vorzugsweise 20 bis 50°, besonders bevorzugt von 25 bis 45° aufweist.

8. Vorrichtung nach den Ansprüchen 1 bis 6, dadurch gekennzeichnet, daß der Sedimentationsteil (2) und/oder der Rührkessel (1) eine Doppelwand (7, 17) bzw. (4, 16) aufweist, die in ihrem Inneren zur Kühlung oder Beheizung der Kristallisationslösung von einem Wärmeaustauschmedium durchströmt wird.

9. Vorrichtung nach den Ansprüchen 1 bis 8, dadurch gekennzeichnet, daß am Rührkessel (1) eine zusätzliche Umpumpschleife mit Wärmetauscher vorgesehen ist.

10. Verfahren zur Trennung von Enantiomeren eines racemischen Gemisches unter Verwendung einer Kristallisiervorrichtung nach den Ansprüchen 1 bis 9, wobei eine übersättigte Lösung des Racemats dem Rührkessel (1) zugeführt und mit Impfkristallen eines Enantiomeren mittels dem Rührwerk (6) intensiv gemischt wird, die Strömung der entstehenden Suspension mit Hilfe des langsamer drehenden, wandgängigen Rührelementes (9,10) im Sedimentationsteil (2) beruhigt und eventuell nachgebildete Produktkristalle auf der Innenwand des Sedimentationsteils (2) abgeschieden werden und die von dem Enantiomeren abgereicherte Lösung am Kopf des Sedimentationsteils (2) abgeführt wird.

11. Verfahren nach Anspruch 10, dadurch gekennzeichnet, daß zwei oder mehr Kristallisiervorrichtungen gemäß den Ansprüchen 1 bis 9 hintereinander geschaltet sind und kontinuierlich betrieben werden.

12. Verfahren nach Anspruch 11, dadurch gekennzeichnet daß die Ableitung (13) der ersten Kristallisiervorrichtung mit der Zuleitung (12) der nächsten Kristallisiervorrichtung verbunden ist und in beiden Vorrichtungen unterschiedliche Impfkristalle der optischen Antipoden eingesetzt werden.

13. Verfahren nach Anspruch 10, dadurch gekennzeichnet, daß zwei oder mehr Kristallisiervorrichtungen gemäß den Ansprüchen 1 bis 9 parallel geschaltet und kontinuierlich betrieben werden.

14. Verfahren nach den Ansprüchen 10 bis 13, dadurch gekennzeichnet, daß ein Teilstrom der Suspension aus dem intensiv gerührten Rührkessel (1) über eine zusätzliche Umpumpschleife mit Wärmetauscher entnommen, im Wärmetauscher um 0,1 bis 5 °C erwärmt und dem Rührkessel (1) wieder zugeführt wird.

15. Verwendung der Vorrichtung nach den Ansprüchen 1 bis 9 zur Trennung von racemischen Gemischen mittels Kristallisation.

## Claims

1. Crystallization apparatus, in particular for the crystallization of solids which are difficult to separate, preferably for the resolution of racemic mixtures, from their solutions,
comprising an upper part (2) and a lower part (1), characterized in that
the lower part which has an agitator (6), optionally a feed line (12) for the crystallization solution and optionally a discharge line (14) for the suspension of the crystallized product is formed from a heatable and coolable stirred vessel (1),
in that the upper part which has a stirring element (9, 10) running around the wall, optionally a discharge line (13) for the solution depleted in product and an opening (18) to the stirred vessel (1) is formed from a conical, heatable and coolable sedimentation section (2),
where the agitator (6) generates, in the region of the opening (18), flow of the crystallization solution directed away from the opening (18).

2. Apparatus according to Claim 1, characterized in that the agitator (6) is a radial-flow agitator, in particular an impeller stirrer driven from below.

3. Apparatus according to Claim 1, characterized in that the agitator (22) is an axial-flow agitator which is driven from below and is located in a guide tube (21).

4. Apparatus according to Claims 1 to 3, characterized in that the stirring element (9, 10) running around the wall is a slow-running blade stirrer (10) driven from below.

5. Apparatus according to Claim 4, characterized in that the blade stirrer (10) has an additional frame (9) which keeps the inner wall of the sedimentation section (2) free of crystals.

6. Apparatus according to Claim 5, characterized in that the frame (9) is heatable or coolable.

7. Apparatus according to Claims I to 6, characterized in that the cone of the sedimentation section (2) has an opening angle of from 10 to 60°, preferably from 20 to 50°, particularly preferably from 25 to 45°.

8. Apparatus according to Claims 1 to 6, characterized in that the sedimentation section (2) and/or the stirred vessel (1) has a double wall (7, 17) or (4, 16) through the interior of which a heat-transfer medium is passed for cooling or heating the crystallization solution.

9. Apparatus according to Claims 1 to 8, characterized in that the stirred vessel (1) is provided with an additional pumped circulation loop with heat exchanger.

10. Process for separating enantiomers of a racemic mixture using a crystallization apparatus according to Claims 1 to 9, wherein a supersaturated solution of the racemate is fed to the stirred vessel (1) and is intensively mixed with seed crystals of one enantiomer by means of the agitator (6), the flow of the resulting suspension is calmed in the sedimentation section (2) with the aid of the slow-turning stirring element (9, 10) running around the wall and any further product crystals formed on the inner wall of the sedimentation section (2) are removed and the solution depleted in the enantiomer is discharged at the top of the sedimentation section (2).

11. Process according to Claim 10, characterized in that two or more crystallization apparatuses according to Claims 1 to 9 are connected in series and are operated continuously.

12. Process according to Claim 11, characterized in that the discharge line (13) of the first crystallization apparatus is connected to the feed line (12) of the next crystallization apparatus and different seed crystals of the opposite enantiomers are used in the two apparatuses.

13. Process according to Claim 10, characterized in that two or more crystallization apparatuses according to Claims 1 to 9 are connected in parallel and are operated continuously.

14. Process according to Claims 10 to 13, characterized in that a substream of the suspension is taken from the intensively stirred stirred vessel (1) via an additional pumped circulation loop with heat exchanger, heated by 0.1-5°C in the heat exchanger and returned to the stirred vessel (1).

15. Use of the apparatus according to Claims 1 to 9 for resolving racemic mixtures by means of crystallization.

## Revendications

1. Dispositif de cristallisation, en particulier pour la cristallisation de matières solides difficilement séparables, de préférence pour la résolution de mélanges racémiques à partir de leurs solutions, consistant en une partie supérieure (2) et en une partie inférieure (1), caractérisé en ce que la partie inférieure, qui comporte un agitateur (6), éventuellement une conduite d'amenée (12) pour la solution de cristallisation et éventuellement une conduite d'évacuation (14) pour la suspension du produit cristallisé, est constituée par un récipient agité (1) pouvant être maintenu à température constante, en ce que la partie supérieure, qui comporte un élément agitateur longeant la paroi (9, 10), éventuellement une conduite d'évacuation (13) pour la solution appauvrie en produit et une ouverture (18) communicant avec le récipient agité (1), est constituée par une partie de sédimentation conique (2) qui peut être maintenue à température constante, où l'agitateur (6) produit dans le domaine de l'ouverture (18) un écoulement de la solution de cristallisation qui s'éloigne de l'ouverture (18).

2. Dispositif selon la revendication 1, caractérisé en ce que l'agitateur (6) est un propulseur radial, en particulier un agitateur à ailes entraîné par en dessous.

3. Dispositif selon la revendication 1, caractérisé en ce que l'agitateur (22) est un propulseur axial entraîné par en dessous qui est disposé dans un tube de guidage (21).

4. Dispositif selon les revendications 1 à 3, caractérisé en ce que l'élément agitateur longeant la paroi (9, 10) est un agitateur à pales (10) entraîné par en dessus et tournant lentement.

5. Dispositif selon la revendication 4, caractérisé en ce que l'agitateur à pales (10) comporte un cadre (9) supplémentaire qui maintient la paroi interne de la partie de sédimentation (2) exempte de cristaux.

6. Dispositif selon la revendication 5, caractérisé en ce que le cadre (9) peut être chauffé ou refroidi.

7. Dispositif selon les revendications 1 à 6, caractérisé en ce que le cône de la partie de sédimentation (2) présente un angle d'ouverture de 10 à 60°, de préférence de 20 à 50°, de manière particulièrement préférée de 25 à 45°.

8. Dispositif selon les revendications 1 à 6, caractérisé en ce que la partie de sédimentation (2) et /ou le récipient agité (1) comportent une double paroi (7, 17) respectivement (4, 16) qui est parcourue à l'intérieur par un caloporteur pour le refroidissement ou le chauffage de la solution de cristallisation.

9. Dispositif selon les revendications 1 à 8, caractérisé en ce qu'une boucle de circulation par pompage supplémentaire comportant un échangeur de chaleur est prévue sur le récipient agité (1).

10. Procédé de séparation d'énantiomères d'un mélange racémique au moyen d'un dispositif de cristallisation selon les revendications 1 à 9 où une solution sursaturée du racémate est introduite dans le récipient agité (1) et est mélangée de manière intensive avec des germes d'un énantiomère au moyen de l'agitateur (6), l'écoulement de la suspension formée est calmé au moyen de l'élément agitateur longeant la paroi (9, 10), qui tourne lentement, dans la partie de sédimentation (2), et les cristaux de produit éventuellement formés ultérieurement sont séparés sur la paroi interne de la partie de sédimentation (2) et la solution appauvrie en l'énantiomère est évacuée au sommet de la partie de sédimentation (2).

11. Procédé selon la revendication 10, caractérisé en ce que deux ou plusieurs dispositifs de cristallisation selon les revendications 1 à 9 sont branchés en série et sont exploités en continu.

12. Procédé selon la revendication Il, caractérisé en ce que la conduite d'évacuation (13) du premier dispositif de cristallisation est reliée à la conduite d'amenée (12) du dispositif de cristallisation suivant et en ce que des germes des antipodes optiques différents sont utilisés dans les deux dispositifs.

13. Procédé selon la revendication 10, caractérisé en ce que deux ou plusieurs dispositifs de cristallisation selon les revendications 1 à 9 sont branchés en parallèle et sont exploités en continu.

14. Procédé selon les revendications 10 à 13, caractérisé en ce qu'un courant partiel de la suspension est prélevé dans le récipient (1) agité de manière intensive par l'intermédiaire d'une boucle de circulation par pompage supplémentaire comportant un échangeur de chaleur, est chauffé de 0,1 à 5 °C dans l'échangeur de chaleur et est renvoyé au récipient agité (1).

15. Utilisation du dispositif selon les revendications 1 à 9 pour la résolution de mélanges racémiques par cristallisation.
